# EUROPÄISCHE PATENTSCHRIFT

(11) **EP 1 276 641 B1**
(45) Veröffentlichungstag und Bekanntmachung des Hinweises auf die Patenterteilung: **11.02.2004**
(21) Anmeldenummer: 01929315.8
(22) Anmeldetag: 05.04.2001
(51) Int. Cl.: B60R 21/01

(54) **ANORDNUNG ZUR KLASSIFIKATION VON VERSCHIEDENEN FAHRMANÖVERN**
DEVICE FOR CLASSIFYING VARIOUS DRIVING MANOEUVRES
SYSTEME POUR LA CLASSIFICATION DE DIFFERENTES MANOEUVRES DE CONDUITE

(30) Priorität: 19.04.2000 DE 10019418
(43) Veröffentlichungstag der Anmeldung: 22.01.2003
(73) Patentinhaber: ROBERT BOSCH GMBH, 70442 Stuttgart (DE)
(72) Erfinder: MATTES, Bernhard, 74343 Sachsenheim (DE); KISSNER, Juergen, 71701 Schwieberdingen (DE); WOTTRENG, Walter, Takasaki-shi, Gunama-ken 370-084 (JP); LANG, Hans-Peter, 71638 Ludwigsburg (DE); KNOEDLER, Kosmas, 74321 Bietigheim-Bissingen (DE)
(86) Internationale Anmeldenummer: PCT/DE2001/001321
(87) Internationale Veröffentlichungsnummer: WO 2001/079037

(56) Entgegenhaltungen:
- DE-A- 19 744 083
- US-A- 5 610 575
- US-A- 6 038 495

## Beschreibung

### Stand der Technik

Aus der DE 197 44 083 A1 ist eine Anordnung zum Erkennen eines bevorstehenden Überrollvorgangs eines Fahrzeugs bekannt. Dazu wird in Abhängigkeit des gemessenen Fahrzeug-Neigungswinkels eine kritische Drehrate des Fahrzeugs um seinen Schwerpunkt ermittelt. Wie dieser Druckschrift zu entnehmen ist, entspricht die kritische Drehrate einer Rotationsenergie des Fahrzeugs, die gerade die potentielle Energie des Fahrzeugs übersteigt. Ist das nämlich der Fall, d. h. ist die kritische Drehrate erreicht, so wird es mit Sicherheit zu einem Überrollen des Fahrzeugs kommen. Es soll frühzeitig eine Prognose getroffen werden, ob es aufgrund eines bestimmten Fahrmanövers zu einem Überrollen des Fahrzeugs kommen wird, so daß rechtzeitig vor dem tatsächlichen Überrollen im Fahrzeug vorhandene Sicherheitseinrichtungen (z. B. Airbags, Überrollbügel, etc.) ausgelöst werden können. Ein Überrollvorgang eines Fahrzeugs ist sehr wahrscheinlich bei einem Fahrmanöver, bei dem zum einen der Schwerpunkt des Fahrzeugs im Schwerefeld der Erde um eine bestimmte Höhe angehoben wird, beispielsweise beim Überfahren einer Rampe, und zum anderen das Fahrzeug noch Bodenkontakt hat. Bei einer solchen Rampenüberfahrt erfährt das Fahrzeug eine Umwandlung von Rotationsenergie in potentielle Energie. Ein anderes Fahrmanöver, das mit hoher Wahrscheinlichkeit zu einem Überrollen des Fahrzeugs führt, stellt die sogenannte Böschungsfahrt dar, bei der das Fahrzeug über eine Böschung fährt und dadurch zum Kippen kommt. Bei einem Böschungskippen wird anders als bei Rampenüberfahrten potentielle Energie in Rotationsenergie umgewandelt; das Fahrzeug kippt nämlich ohne äußere Einflüsse (abgesehen von der Schwerkraft) die Böschung hinunter. Ein ähnliches Verhalten wie bei Rampenüberfahrten zeigen Fahrzeuge bei extremen Ausweichmanövern (z. B. Fishhook, Elchtest) oder bei seitlichem Driften mit abrupter Änderung des Reibungskoeffizienten (Curb/Soil Tripped Rollover). Diese beiden verschiedenen Arten von Fahrmanövern können zu Überrollvorgängen führen, welche eine grundsätzlich unterschiedliche Bewegung der Insassen im Fahrzeug hervorrufen. Um den Insassen in all solchen Fällen einen optimalen Schutz zu bieten, ist es erforderlich, auf die verschiedenen Arten von Überrollvorgängen mit entsprechend angepaßten Auslösevorgängen für Rückhalteeinrichtungen zu reagieren.

Der Erfindung liegt die Aufgabe zugrunde, eine Anordnung zur Klassifikation von verschiedenen Fahrmanövern, die zum Überrollen eines Fahrzeugs führen können, anzugeben, welche zwischen verschiedenen charakteristischen Fahrmanövern unterscheidet, so daß für die von der Anordnung jeweils entschiedene Fahrmanöver-Klasse ein spezieller Auslösealgorithmus für Rückhalteeinrichtungen initiiert werden kann.

### Vorteile der Erfindung

Die genannte Aufgabe wird mit den Merkmalen des Anspruchs 1 dadurch gelöst, daß ein Beschleunigungssensor vorhanden ist, der die Beschleunigung des Fahrzeugs in Richtung seiner Hochachse mißt, und daß ein Klassifikator, wenn die gemessene Beschleunigung oberhalb einer Schwelle von 1g liegt, auf ein Fahrmanöver entscheidet, bei dem das Fahrzeug, wie bei einer Rampenüberfahrt, einseitig nach oben abhebt, und daß der Klassifikator bei einer zwischen 0g und 1g liegenden Beschleunigung auf ein Fahrmanöver entscheidet, bei dem das Fahrzeug, wie bei einer Fahrt über eine Böschung, einseitig nach unten abkippt.

Gemäß der Erfindung ist eine Unterscheidung zwischen zwei wesentlichen Klassen von Fahrmanövern, nämlich in der Art einer Rampenüberfahrt und einer Böschungsfahrt, möglich. Diese beiden Fahrmanöver-Klassen unterscheiden sich durch eine entgegengesetzte Richtung ihrer Schwerpunktsbeschleunigung. Bei einer Rampenüberfahrt ist die Schwerpunktsbeschleunigung in positive Richtung der Fahrzeughochachse und bei einer Böschungsfahrt in negative Richtung der Fahrzeughochachse gerichtet. Bei beiden Fahrmanöver-Klassen erfahren die Insassen sehr unterschiedliche Bewegungen, welche verschiedene Ansteuerungen von Rückhalteeinrichtungen im Fahrzeug erfordern.

Vorteilhafte Weiterbildungen der Erfindung gehen aus den Unteransprüchen hervor. Demnach entscheidet der Klassifikator bei einer gemessenen Beschleunigung von ca. 0g auf ein Fahrmanöver, das einem freien Fall entspricht.

Es ist zweckmäßig, daß der Klassifikator erst dann eine Schwellwertentscheidung der gemessenen Beschleunigung zur Entscheidung der Fahrmanöver-Klasse durchführt, wenn eine von einem Drehratensensor gemessene Drehrate des Fahrzeugs um seine Längsachse eine vorgegebene Schwelle überschreitet.

### Zeichnung

Anhand eines ein der Zeichnung dargestellten Ausführungsbeispiels wird nachfolgend die Erfindung näher erläutert. Es zeigen:
Figur 1 ein Blockschaltbild einer Anordnung zur Klassifizierung von verschiedenen Fahrmanövern und
Figur 2 eine Einteilung der Fahrmanöver-Klassen in Abhängigkeit von der Beschleunigung des Fahrzeugs in Richtung seiner Hochachse.

### Beschreibung eines Ausführungsbeispiels

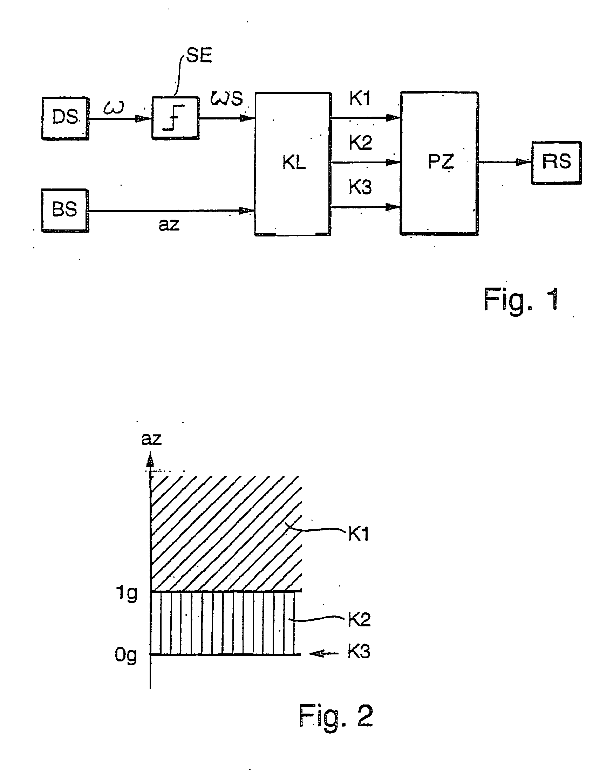

Wie die Figur 1 zeigt, ist, um drei verschiedene Klassen K1, K2 und K3 von Fahrmanövern unterscheiden zu können, ein Beschleunigungssensor BS vorhanden, der die Beschleunigung az in Richtung der Hochachse eines Fahrzeugs mißt. Es handelt sich dabei um einen sogenannten Niedrig-g-Beschleunigungssensor. Das gemessene Beschleunigungssignal az wird einem Klassifikator KL zugeführt. Dieser Klassifikator KL ist im Prinzip ein Schwellwertentscheider.

In der Figur 2 ist dargestellt, wie der Klassifikator KL in Abhängigkeit von der Beschleunigung az in Richtung der Hochachse des Fahrzeugs die Klasseneinteilung in K1, K2 und K3 vornimmt. Wird nämlich eine Beschleunigung az gemessen, die oberhalb einer Schwelle von 1g - mit g ist die Erdbeschleunigung bezeichnet - so entscheidet der Klassifikator KL auf eine Fahrmanöverklasse K1, bei dem das Fahrzeug einseitig nach oben abhebt. Ein solches Fahrmanöver tritt bei einer Rampenüberfahrt auf oder bei einem seitlichen Driften des Fahrzeugs mit abrupter Änderung des Reibungskoeffizienten (Curb/Soil Tripped Rollover) oder bei extremen Ausweichmanövern (z. B. Fishhook, Elchtest).

Wird vom Klassifikator KL durch Schwellwertentscheidung festgestellt, daß die gemessene Beschleunigung az in Richtung der Fahrzeughochachse zwischen 0g und 1g liegt, so entscheidet er auf eine Fahrzeugmanöver-Klasse K2, bei dem das Fahrzeug einseitig nach unten abkippt, so wie es bei einer Böschungsfahrt der Fall ist.

Wird vom Klassifikator KL eine Beschleunigung az im Bereich von 0g festgestellt, so entscheidet dieser auf eine Fahrmanöver-Klasse K3, die einem freien Fall des Fahrzeugs entspricht, was dann gegeben ist, wenn das Fahrzeug vollständig vom Boden abhebt.

Im Bereich einer gemessenen Beschleunigung az von 1g kann man von einer normalen Fahrt sprechen, wenn sich also das Fahrzeug auf einer ebenen Fahrbahn bewegt, ohne ein abruptes einseitiges Anheben oder Absenken.

Der Klassifikator KL erhält ein Startsignal ωs für die Schwellwertentscheidung der gemessenen Beschleunigung az in Richtung der Fahrzeughochachse. Dieses Startsignal ωs für den Klassifikator KL bewirkt, daß erst, wenn die von einem Drehratensensor DS gemessene Drehrate ω um die Längsachse des Fahrzeugs einen bestimmten von einem Schwellwertentscheider SE ermittelten Schwellwert ωs übersteigt, die Beschleunigung az einer Schwellwertentscheidung unterzogen wird. Denn erst, wenn das Fahrzeug eine gewisse Drehrate ωs um seine Längsachse aufweist, ist die Wahrscheinlichkeit gegeben, daß es überhaupt zu einem Überrollen kommen kann. Erst dann macht es Sinn, vom Klassifikator KL das aktuelle Fahrverhalten des Fahrzeugs in eine Fahrmanöver-Klasse K1, K2 oder K3 einzuteilen, welche zu einem charakteristischen Überrollverhalten des Fahrzeugs führen wird.

Die vom Klassifikator KL ermittelte Fahrmanöver-Klasse K1, K2 oder K3 wird einem Prozessor PZ mitgeteilt. In diesem Prozessor PZ wird je nach der mitgeteilten Fahrmanöver-Klasse ein bestimmter Auslösealogirthmus für Rückhalteeinrichtungen (z. B. Airbags, Gurtstraffer, Überrollbügel etc.) initiiert. Denn bei jeder Fahrmanöver-Klasse K1, K2 oder K3 und dem sich daraus ergebenden speziellen Überrollverhalten des Fahrzeugs ergibt sich eine andere Insassenbewegung, auf die mit einer speziellen Auslösekonstellation (Zeitpunkt und Reihenfolge) von Rückhalteeinrichtungen reagiert werden sollte.

## Patentansprüche

1. Anordnung zur Klassifikation von verschiedenen Fahrmanövern, die zum Überrollen eines Fahrzeugs führen können, wobei ein Beschleunigungssensor (BS) vorhanden ist, der die Beschleunigung (az) des Fahrzeugs in Richtung seiner Hochachse mißt, **dadurch gekennzeichnet, daß** ein Klassifikator (KL), wenn die gemessene Beschleunigung (az) oberhalb einer Schwelle von 1g (g ist Erdbeschleunigung) liegt, auf ein Fahrmanöver (K1) entscheidet, bei dem das Fahrzeug, wie bei einer Rampenüberfahrt, einseitig nach oben abhebt, und daß der Klassifikator (KL) bei einer zwischen 0g und 1g liegenden Beschleunigung (az) auf ein Fahrmanöver (K2) entscheidet, bei dem das Fahrzeug, wie bei einer Fahrt über eine Böschung, einseitig nach unten abkippt.

2. Anordnung nach Anspruch 1, **dadurch gekennzeichnet, daß** der Klassifikator (KL) bei einer gemessenen Beschleunigung (az) von ca. 0g auf ein Fahrmanöver (K3) entscheidet, das einem freien Fall des Fahrzeugs entspricht.

3. Anordnung nach Anspruch 1 oder 2, **dadurch gekennzeichnet, daß** der Klassifikator (KL) erste dann eine Schwellwertentscheidung der gemessenen Beschleunigung (az) durchführt, wenn eine von einem Drehratensensor (DS) gemessene Drehrate (ω) des Fahrzeugs um seine Längsachse eine vorgegebene Schwelle (ωs) überschreitet.

## Claims

1. Arrangement for classifying various driving manoeuvres which can cause a vehicle to roll over, an accelerator sensor (BS) being provided which measures the acceleration (az) of the vehicle in the direction of its vertical axis, **characterized in that**, if the measured acceleration (az) lies above a threshold of 1g (g is the acceleration of the earth), a classifier (KL) decides that there is a driving manoeuvre (K1) in which the vehicle lifts up on one side, as when going over a ramp, and **in that**, when there is an acceleration (az) between 0g and 1g, the classifier (KL) decides that there is a driving manoeuvre (K2) in which the vehicle is tilting over in the downward direction on one side, as when travelling over a side slope.

2. Arrangement according to Claim 1, **characterized in that**, when there is a measured acceleration (az) of approximately 0g, the classifier (KL) decides that there is a driving manoeuvre (K3) which corresponds to a free fall of the vehicle.

3. Arrangement according to Claim 1 or 2, **characterized in that** the classifier (KL) does not make a threshold value decision relating to the measured acceleration (az) until a rotational rate (ω) - measured by a rotational rate sensor (DS) - of the vehicle about its longitudinal axis exceeds a predetermined threshold value (ωs).

## Revendications

1. Système pour la classification de différentes manoeuvres de conduite pouvant amener un véhicule à partir en tonneaux, utilisant un accéléromètre (BS) mesurant l'accélération (az) du véhicule selon la direction de l'axe vertical de celui-ci,
**caractérisé en ce que**
un classificateur (KL), quand l'accélération mesurée (az) dépasse le seuil de 1g (g étant l'accélération de la pesanteur), décide qu'il est en présence d'une manoeuvre de conduite (K1) dans laquelle le véhicule comme dans la montée d'une rampe, bascule d'un côté vers le haut, tandis qu'en présence d'une accélération (az) comprise entre 0g et 1g, le classificateur (KL) décide qu'il est en présence d'une manoeuvre de conduite (K2) dans laquelle le véhicule, comme dans la descente d'un talus, bascule d'un côté vers le bas.

2. Système selon la revendication 1,
**caractérisé en ce que**
le classificateur (KL) dans le cas d'une accélération mesurée (az) d'environ 0g, décide qu'il est en présence d'une manoeuvre de conduite correspondant à une chute libre du véhicule.

3. Système selon l'une quelconque des revendications 1 ou 2,
**caractérisé en ce que**
le classificateur (KL) effectue une sélection par valeurs de seuil de l'accélération mesurée (az) seulement quand un taux de rotation (ω) du véhicule autour de son axe longitudinal mesuré par un détecteur de taux de rotation (DS), dépasse un seuil prédéfini (ωs).
